# EUROPEAN PATENT APPLICATION

(11) **EP 4 794 315 A1**
(43) Date of publication of application: **19.08.2026**
(21) Application number: 23955497.5
(22) Date of filing: 13.10.2023
(51) Int. Cl.: H04M 11/00, H04M 3/56

(54) **INFORMATION PROCESSING DEVICE, CONTROL METHOD, PROGRAM, AND STORAGE MEDIUM**

(71) Applicant: Pioneer Corporation, Tokyo 113-0021 (JP)
(72) Inventor: SUZUKI, Tadashi, Tokyo 170-0013 (JP); INAGAKI, Katsutoshi, Tokyo 170-0013 (JP); TOKOI, Akinori, Tokyo 170-0013 (JP)
(74) Representative: Viering, Jentschura & Partner mbB Patent- und Rechtsanwälte
(86) International application number: PCT/JP2023/037220
(87) International publication number: WO 2025/079249

(57) **Abstract**

A server device functions as an information processing device and comprises an acquisition means, an image extraction means, and a display control means. The acquisition means acquires mobile object information including a current position, a moving direction, and a moving speed of a mobile object. The image extraction means extracts a past scenery image corresponding to a surrounding scenery at the current position of the mobile object, based on the current position, the moving direction, and the moving speed, from among past images captured in the past. The display control means causes the past scenery image to be displayed on a terminal device existing outside the mobile object.

## Description

### TECHNICAL FIELD

The present invention relates to a system for displaying an image related to a position of an in-vehicle device.

### BACKGROUND ART

Conventionally, technologies have been known that enable conversation between a driver of a vehicle and a person outside the vehicle. For example, Patent Document 1 discloses a technology in which an in-vehicle device and an out-of-vehicle terminal communicate with each other to mediate a voice call between the driver of the vehicle and an operator of the out-of-vehicle terminal, and in which the in-vehicle device transmits front image data representing an image of the front of the vehicle to the out-of-vehicle terminal.

### PRECEDING TECHNICAL REFERENCE

### PATENT DOCUMENT

Patent Document 1: Japanese Patent Application Laid-open under 2016-213791

### SUMMARY

### PROBLEM TO BE SOLVED

With the above-described methods, for example, in a case where image transmission is not performed from the in-vehicle device, or in a case where image transmission from the in-vehicle device is interrupted, the out-of-vehicle terminal is no longer able to confirm a front scenery of the vehicle.

In view of the above-described problems, one object of the present invention is to provide an information processing device capable of displaying, on an out-of-vehicle terminal, a scenery image corresponding to an external scenery as viewed from a mobile object.

### MEANS FOR SOLVING THE PROBLEM

The invention according to the claims is characterized in that it is an information processing device comprising:
an acquisition means configured to acquire mobile object information including a current position, a moving direction, and a moving speed of a mobile object;
an image extraction means configured to extract a past scenery image corresponding to a surrounding scenery at the current position of the mobile object, based on the current position, the moving direction, and the moving speed, from among past images captured in the past; and
a display control means configured to cause the past scenery image to be displayed on a terminal device existing outside the mobile object.

The invention according to the claims is characterized in that it is a control method executed by a computer, comprising:
acquiring mobile object information including a current position, a moving direction, and a moving speed of a mobile object;
extracting a past scenery image corresponding to a surrounding scenery at the current position of the mobile object, based on the current position, the moving direction, and the moving speed, from among past images captured in the past; and
causing the past scenery image to be displayed on a terminal device existing outside the mobile object.

The invention according to the claims is a computer program causing a computer to execute processing of:
acquiring mobile object information including a current position, a moving direction, and a moving speed of a mobile object;
extracting a past scenery image corresponding to a surrounding scenery at the current position of the mobile object, based on the current position, the moving direction, and the moving speed, from among past images captured in the past; and
causing the past scenery image to be displayed on a terminal device existing outside the mobile object.

### BRIEF DESCRIPTION OF THE DRAWINGS

[Fig. 1] Fig. 1 shows a configuration example of a driving voice call system according to an embodiment.
[Fig. 2] Fig. 2 shows an example of a schematic configuration of an in-vehicle device.
[Fig. 3] Fig. 3 shows an example of a schematic configuration of an out-of-vehicle terminal.
[Fig. 4] Fig. 4 shows an example of a schematic configuration of a server device.
[Fig. 5] Fig. 5 shows an example of a flowchart of a past scenery image display processing.
[Fig. 6] Fig. 6 shows another example of a flowchart of the past scenery image display processing.
[Fig. 7] Fig. 7 shows another example of a flowchart of the past scenery image display processing.
[Fig. 8] Fig. 8 shows another example of a flowchart of the past scenery image display processing.
[Fig. 9] Figs. 9A and 9B show display examples of the out-of-vehicle terminal.
[Fig. 10] Fig. 10 shows a display example of the out-of-vehicle terminal according to modification 2.
[Fig. 11] Fig. 11 is a diagram for explaining a method of estimating interpolated positions.
[Fig. 12] Figs. 12A and 12B are diagrams for explaining a flow until each image is displayed, and points at which delays occur.

### MODES FOR EXERCISING THE INVENTION

According to one aspect of the present invention, there is provided an information processing device comprising: an acquisition means configured to acquire mobile object information including a current position, a moving direction, and a moving speed of a mobile object; an image extraction means configured to extract a past scenery image corresponding to a surrounding scenery at the current position of the mobile object, based on the current position, the moving direction, and the moving speed, from among past images captured in the past; and a display control means configured to cause the past scenery image to be displayed on a terminal device existing outside the mobile object.

The above-described information processing device can cause the terminal device existing outside the mobile object to display the past scenery image corresponding to the surrounding scenery of the mobile object. As a result, the user can grasp what kind of location the mobile object is traveling through.

According to one mode of the above information processing device, the image extraction means identifies a corrected position advanced from the current position in the moving direction based on the moving speed, and extracts, as the past scenery image, the past image associated with the corrected position. As a result, the information processing device can appropriately cause the terminal device to display the past scenery image.

According to another mode of the above information processing device, the image extraction means identifies, as the corrected position, a position advanced from the current position in the moving direction by a distance traveled during a predetermined time at the moving speed. In a preferred example, the predetermined time is set based on an update interval of the mobile object information. As a result, the information processing device can cause an interpolated image to be displayed on the terminal device during a period from when the mobile object information is acquired until next mobile object information is acquired.

According to still another mode of the above information processing device, the predetermined time is set based on a time required for the image extraction means to perform a process of extracting the past scenery image. As a result, the information processing device can correct display delay of the past scenery image.

According to still another mode of the above information processing device, the acquisition means acquires a current scenery image obtained by capturing an external scenery from the mobile object at the current position, the information processing device further comprising display image determination means configured to determine an image to be displayed on the terminal device from among the current scenery image and the past scenery image, and the display control means causes the image determined by the display image determination means to be displayed on the terminal device. As a result, the information processing device can appropriately cause the terminal device to display the current scenery image or the past scenery image.

According to still another mode of the above information processing device, the predetermined time is set based on a difference time between a past image display time required from when the current position of the mobile object reaches a first position until the past scenery image corresponding to the first position is displayed on the terminal device, and a current image display time required from when the current position of the mobile object reaches the first position until the current scenery image captured from the mobile object at the first position is displayed on the terminal device. As a result, the information processing device can correct display delay of the past scenery image.

According to still another mode of the above information processing device, the information processing device is used in a system that mediates communication between an occupant of the mobile object and a user who uses the terminal device outside the mobile object. As a result, the user can communicate with an occupant of the mobile object while checking a scenery image corresponding to the surrounding scenery of the mobile object.

According to another aspect of the present invention, there is provided a control method comprising: acquiring mobile object information including a current position, a moving direction, and a moving speed of a mobile object; extracting a past scenery image corresponding to a surrounding scenery at the current position of the mobile object, based on the current position, the moving direction, and the moving speed, from among past images captured in the past; and causing the past scenery image to be displayed on a terminal device existing outside the mobile object. The information processing device can, by executing this control method, cause the terminal device existing outside the mobile object to display the past scenery image corresponding to the surrounding scenery of the mobile object.

According to still another aspect of the present invention, there is provided a program causing a computer to execute processing of: acquiring mobile object information including a current position, a moving direction, and a moving speed of a mobile object; extracting a past scenery image corresponding to a surrounding scenery at the current position of the mobile object, based on the current position, the moving direction, and the moving speed, from among past images captured in the past; and causing the past scenery image to be displayed on a terminal device existing outside the mobile object. The computer of information processing device can, by executing this program, cause the terminal device existing outside the mobile object to display the past scenery image corresponding to the surrounding scenery of the mobile object. The program can be stored and handled on a storage medium.

### EMBODIMENTS

A preferred embodiment of the present invention will be described below with reference to the attached drawings.

### <System configuration>

### [Overall configuration]

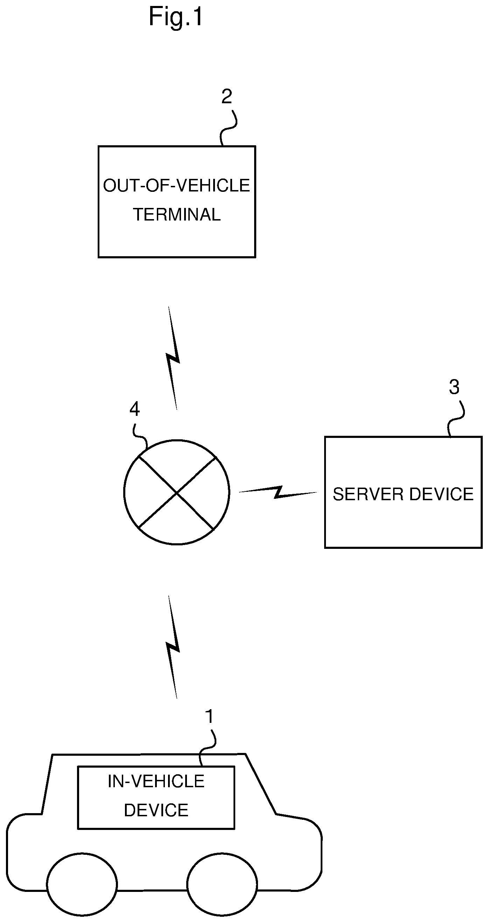

Fig. 1 shows a configuration example of a driving voice call system according to a first embodiment. The driving voice call system includes an in-vehicle device 1 provided in a vehicle, an out-of-vehicle terminal 2 used by a person outside the vehicle, and a server device 3. The in-vehicle device 1 and the server device 3, and the out-of-vehicle terminal 2 and the server device 3 performs data communication via a communication network 4 such as the Internet and a dedicated communication network, respectively.

The in-vehicle device 1 is a terminal device that moves together with the vehicle, and performs data communication with the server device 3 via the communication network 4. Therefore, it can be said that the in-vehicle device 1 is a communication device that moves together with the vehicle. Hereafter, the vehicle equipped with the in-vehicle device 1 is also referred to as a "subject vehicle." The in-vehicle device 1 transmits voice data for the out-of-vehicle terminal 2 and scenery images (moving images) capturing the exterior of the subject vehicle to the server device 3 during a voice call between a driver of the subject vehicle and a user of the out-of-vehicle terminal 2. In addition, the in-vehicle device 1 transmits mobile object information to the server device 3 at predetermined intervals T1. The mobile object information includes the current position of the subject vehicle, the moving speed, the moving direction, and the like. The in-vehicle device 1 may be an in-vehicle device installed or attached to a vehicle, or may be a portable terminal used by being brought into the vehicle, such as a smartphone. In addition, the in-vehicle device 1 may be integrated into the vehicle.

The out-of-vehicle terminal 2 is a terminal device operated by a person existing outside the subject vehicle, and performs data communication with the server device 3 via the communication network 4. The out-of-vehicle terminal 2 transmits the voice data for the in-vehicle device 1 to the server device 3 during the voice call between the driver of the subject vehicle and the user of the out-of-vehicle terminal 2. In addition, during the voice call, the out-of-vehicle terminal 2 receives display data including the scenery image or a past scenery image from the server device 3 and displays it. Thus, the user of the out-of-vehicle terminal 2 can grasp what place the subject vehicle is traveling. The out-of-vehicle terminal 2 is, for example, the portable terminal such as the smartphone. The out-of-vehicle terminal 2 is an example of a "terminal device."

The server device 3 relays data necessary for the voice call between the in-vehicle device 1 and the out-of-vehicle terminal 2. In addition, under predetermined conditions described below, the server device 3 determines whether to transmit the scenery image to the out-of-vehicle terminal 2 or to transmit the past scenery image corresponding to the scenery image to the out-of-vehicle terminal 2. Then, the server device 3 generates the display data including the scenery image or the past scenery image and transmits the generated display data to the out-of-vehicle terminal 2. Here, the past scenery image refers to the past scenery image captured prior to the scenery image being captured in real time. The past scenery image corresponding to the scenery image refers to the past scenery image that corresponds to the capture position and capture direction of the scenery image. The server device 3 can extract the past scenery image corresponding to the scenery image based on the mobile object information received from the in-vehicle device 1.

In addition, the server device 3 may, even outside of the voice call, display images including the scenery image or the past scenery image on a display of the out-of-vehicle terminal 2 in response to a request from the out-of-vehicle terminal 2, thereby allowing the user of the out-of-vehicle terminal 2 to unilaterally confirm the locations through which the subject vehicle is traveling.

### [In-vehicle device]

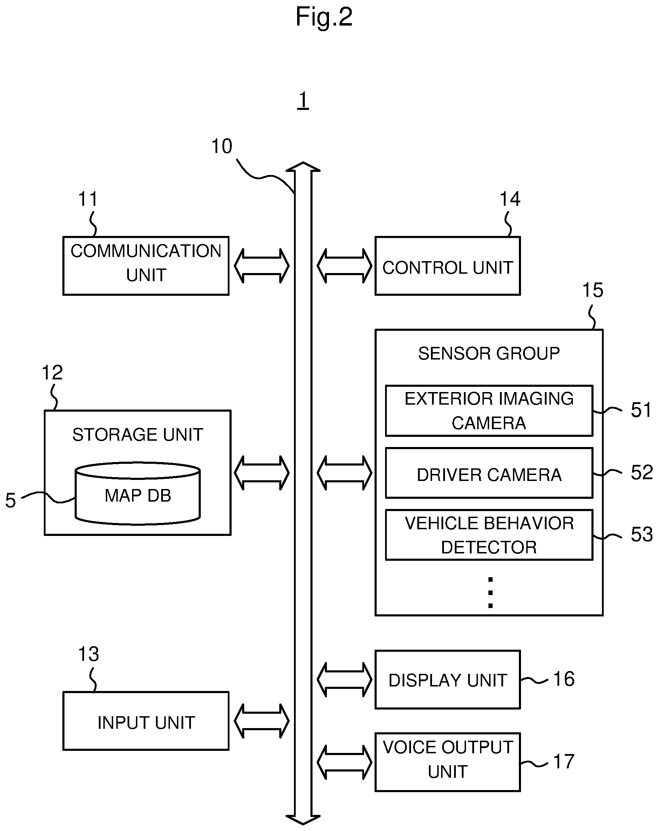

Fig. 2 shows an example of a schematic configuration of the in-vehicle device 1. The in-vehicle device 1 mainly includes a communication unit 11, a storage unit 12, an input unit 13, a control unit 14, a sensor group 15, a display unit 16, and a voice output unit 17. Each element in the in-vehicle device 1 is connected to each other via a bus line 10.

The communication unit 11 performs data communication with the other terminals based on the control of the control unit 14. For example, the communication unit 11 may receive map data for updating a map DB (DataBase) 5 from a map management server (not shown).

The storage unit 12 is composed of various memories such as a RAM (Random Access Memory), a ROM (Read Only Memory), and a non-volatile memory (including a hard disk drive, a flash memory, and the like.). The storage unit 12 stores a program for the in-vehicle device 1 to execute predetermined processing. The above-described program may include an application program for making a call and the like. The storage unit 12 is also used as a work memory of the control unit 14. The program to be executed by the in-vehicle device 1 may be stored in a storage medium other than the storage unit 12.

Further, the storage unit 12 stores the map DB 5. The map DB 5 stores various types of data required for the route guidance. The map DB 5 stores data required for map display based on predetermined reference positions such as a current position of the subject vehicle. The map DB 5 is a database that includes, for example, road data representing a road network by a combination of nodes and links, and facility data representing facilities that are candidates for a destination, stopover points, or landmarks. The map DB 5 may be updated based on the information that the communication unit 11 receives from the map management server under the control of the control unit 14.

The input unit 13 is a button, a touch panel, a remote controller, a voice input device, or the like for the user to operate. The display unit 16 is a display or the like for performing display under the control of the control unit 14. The voice output unit 17 is a speaker or the like for outputting sound under the control of the control unit 14.

The control unit 14 includes a CPU (Central Processing Unit), a GPU (Graphics Processing Unit), and the like, and controls the entire in-vehicle device 1.

Incidentally, the processing executed by the control unit 14 is not limited to be realized by software by a program, and it may be realized by any combination of hardware, firmware, and software. The process executed by the control unit 14 may be realized by an integrated circuit that can be programmed by the user, for example, a FPGA (Field-Programmable Gate Array) or a microcomputer. In this case, a program that the control unit 14 implements in this embodiment may be realized by the integrated circuit.

The sensor group 15 includes various sensors that perform sensing related to a state of the subject vehicle or an environment outside the vehicle. The sensor group 15 includes an exterior imaging camera 51, a driver camera 52, and a vehicle behavior detector 53.

The exterior imaging camera 51 is one or more cameras for imaging an outside of the subject vehicle, such as the front of the subject vehicle, and generates images captured at predetermined time intervals (also referred to as a "scenery images"). The driver camera 52 is a camera provided so as to include the driver's face within an imaging range, and generates images captured at predetermined time intervals (also referred to as "driver images").

The vehicle behavior detector 53 generates detection signals indicating behavior of the subject vehicle, such as a current position, a vehicle speed, an acceleration, a steering angle, and the like. The vehicle behavior detector 53 includes, for example, a GNSS (Global Navigation Satellite System) receiver, a gyroscopic sensor, an IMU (Inertial Measurement Unit), a vehicle speed sensor, an acceleration sensor, a steering angle sensor, and the like.

In addition, the sensor group 15 may include, in addition to the exterior imaging camera 51, the driver camera 52, and the vehicle behavior detector 53, various external sensors (including cameras, LiDARs, radars, ultrasonic sensors, infrared sensors, sonars, and the like) and internal sensors.

The configuration of the in-vehicle device 1 shown in Fig. 2 is merely an example, and various changes may be made to the configuration shown in Fig. 2. For example, instead of storing the map DB 5 in the storage unit 12, the control unit 14 may receive the map information from the map management server (not shown) via the communication unit 11. Further, the in-vehicle device 1 does not include the map DB 5, the server device 3 may perform a processing based on the map DB 5. In another example, at least one of the input unit 13, the display unit 16, and the voice output unit 17 may be provided in the subject vehicle as an external device of the in-vehicle device 1, and may supply the generated signals to the in-vehicle device 1. Further, at least some of the sensors included in the sensor group 15 may be sensors provided in the subject vehicle. In this case, the in-vehicle device 1 may acquire information outputted by the sensors provided in the subject vehicle from the subject vehicle based on a communication protocol such as CAN (Controller Area Network).

### [Out-of-vehicle terminal]

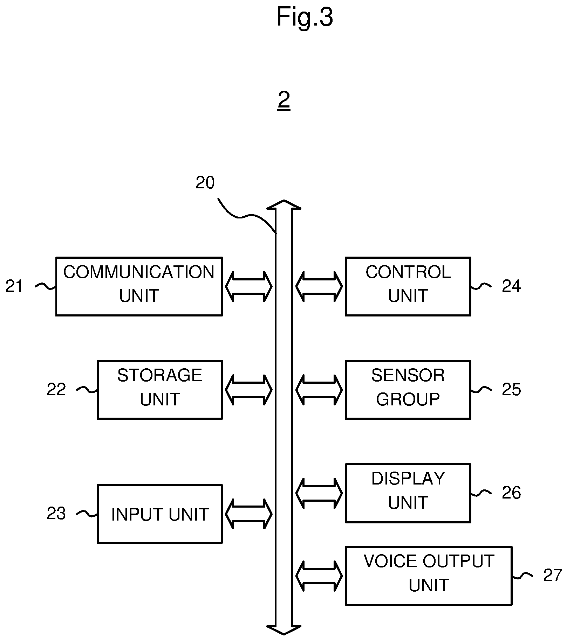

Fig. 3 shows an example of a schematic configuration of the out-of-vehicle terminal 2. The out-of-vehicle terminal 2 mainly includes a communication unit 21, a storage unit 22, an input unit 23, a control unit 24, a sensor group 25, a display unit 26, and a voice output unit 27. Each element in the out-of-vehicle terminal 2 is connected to each other via a bus line 20.

The communication unit 21 performs data communication with the other terminals based on the control of the control unit 24.

The storage unit 22 is composed of various memories such as a RAM, a ROM, and a non-volatile memory. The storage unit 22 stores a program for the out-of-vehicle terminal 2 to execute predetermined processing. The above-described program may include application programs for executing a call with a driver and for displaying information related to driving of the subject vehicle of the in-vehicle device 1 (including map display and display of various captured images) in a state in which communication is established with the in-vehicle device 1 via the server device 3. The storage unit 22 is also used as a work memory of the control unit 24. The program to be executed by the out-of-vehicle terminal 2 may be stored in a storage medium other than the storage unit 22.

The input unit 23 is a button, a touch panel, a remote controller, a voice input device, or the like for the user to operate. The display unit 26 is a display or the like for performing display under the control of the control unit 24. The voice output unit 27 is a speaker or the like for outputting sound under the control of the control unit 24. The sensor group 25 includes an internal sensor that senses a state of the out-of-vehicle terminal 2, and an external sensor that senses a state of an external environment of the out-of-vehicle terminal 2.

The control unit 24 includes a CPU, a GPU, and the like, and controls the entire out-of-vehicle terminal 2. The configuration of the out-of-vehicle terminal 2 shown in Fig. 3 is merely an example, and various changes may be made to the configuration shown in Fig. 3.

### [Server device]

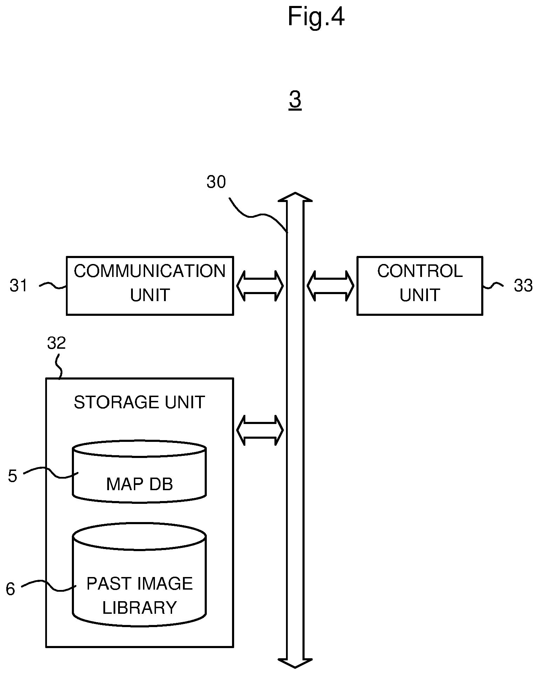

Fig. 4 shows an example of a schematic configuration of the server device 3. The server device 3 mainly includes a communication unit 31, a storage unit 32, and a control unit 33. Each element in the server device 3 is connected to each other via a bus line 30.

The communication unit 31 performs data communication with external devices such as the in-vehicle device 1 and the out-of-vehicle terminal 2 based on the control of the control unit 33.

The storage unit 32 is composed of various memories such as a RAM, a ROM, and a non-volatile memory (including a hard disk drive, a flash memory, and the like). The storage unit 32 stores a program for the server device 3 to execute predetermined processing. The above-described program may include an application program for brokering a call, and an application program for causing the out-of-vehicle terminal 2 to perform display of a map or the scenery image, and the like. The storage unit 32 is also used as a work memory of the control unit 33. The program to be executed by server device 3 may be stored in a storage medium other than the storage unit 32.

The storage unit 32 stores a map DB 5 and a past image library 6. The past image library 6 stores the past scenery images in advance. The past scenery images are stored in the past image library 6 in association with information such as the imaging position including latitude and longitude and lane information, the imaging direction, the imaging date and time, and the weather at the time of imaging.

The control unit 33 includes a CPU, a GPU and the like, and controls the entire server device 3. Further, the control unit 33 executes an extraction processing of past scenery images and a display control processing by executing the program stored in the storage unit 32. The configuration of the server device 3 shown in Fig. 4 is merely an example, and various changes may be made to the configuration shown in Fig. 4.

### [Extraction processing of past scenery images]

Next, the extraction processing of the past scenery images will be described. The server device 3 extracts the past scenery image corresponding to the scenery image of the subject vehicle from the past image library 6 based on the mobile object information (the current position, the moving direction, and the moving speed) of the subject vehicle received from the in-vehicle device 1. Specifically, the server device 3 extracts past scenery images from the past image library 6, the imaging positions of which are within a predetermined range from the current position (latitude and longitude) of the subject vehicle, and the imaging directions of which are the same as the moving direction of the subject vehicle. The server device 3 may extract the past scenery image based on information such as the current date and time (season or time zone) and the current weather in addition to the mobile object information.

### [Display control processing]

Next, the display control processing will be described. The server device 3 determines whether to transmit the scenery image or the past scenery image to the out-of-vehicle terminal 2 based on predetermined conditions described below. In a case where the server device 3 determines to transmit the scenery image to the out-of-vehicle terminal 2, it transmits the scenery image received from the in-vehicle device 1 to the out-of-vehicle terminal 2. On the other hand, in a case where the server device 3 determines to transmit the past scenery image to the out-of-vehicle terminal 2, it performs the above-described extraction processing of the past scenery images and transmits the extracted past scenery image to the out-of-vehicle terminal 2. Hereinafter, specific examples of the predetermined conditions will be described.

### (First example)

During vehicle travel, communication tends to become unstable due to the effects of fading or the like, so there is a possibility that the transmission of scenery images may be delayed or interrupted, or that the image quality of the scenery images may deteriorate. Therefore, in the first example, communication quality of communication between the in-vehicle device 1 and the server device 3 is used as the predetermined condition. If the communication quality is stable, the server device 3 transmits the scenery image received from the in-vehicle device 1 to the out-of-vehicle terminal 2. On the other hand, if the communication quality is unstable, the server device 3 transmits the past scenery image to the out-of-vehicle terminal 2.

The server device 3 can use communication error rate as an indicator of the communication quality. For example, for the communication of the voice data or the display data, the server device 3 determines that the communication quality is unstable in a case where the communication error rate is equal to or greater than a predetermined threshold TH1. On the other hand, in a case where the communication error rate is less than the predetermined threshold TH1, the server device 3 determines that the communication quality is stable.

Here, the error rate is, for example, a packet loss rate. The server device 3 monitors sequence numbers of packets received from the in-vehicle device 1 and detects missing packets. The server device 3 calculates the packet loss rate based on the number of packets successfully received and the number of missing packets. Further, the error rate may be, for example, a communication disconnection time per unit time. The server device 3 records a communication disconnection time that occurs during a period from when the communication with the in-vehicle device 1 is established until a predetermined time elapses, and calculates the communication disconnection time per unit time. Further, in a case where TCP is used as a transport layer protocol of the OSI reference model for transmission and reception of the voice data, the server device 3 may use a packet retransmission rate as the error rate.

Note that, for example, the in-vehicle device 1, the out-of-vehicle terminal 2, and the server device 3 preferably use highly reliable TCP for transmission and reception of the voice data and the mobile object information, and preferably use UDP for transmission and reception of the display data requiring real-time performance, such as scenery images and past scenery images; however, combinations of protocols to be used are not limited to the above. For example, UDP may be used for transmission and reception of the voice data and the mobile object information.

Further, the above-described indicators of communication quality and methods for calculating the communication error rate are merely examples, and are not limited thereto.

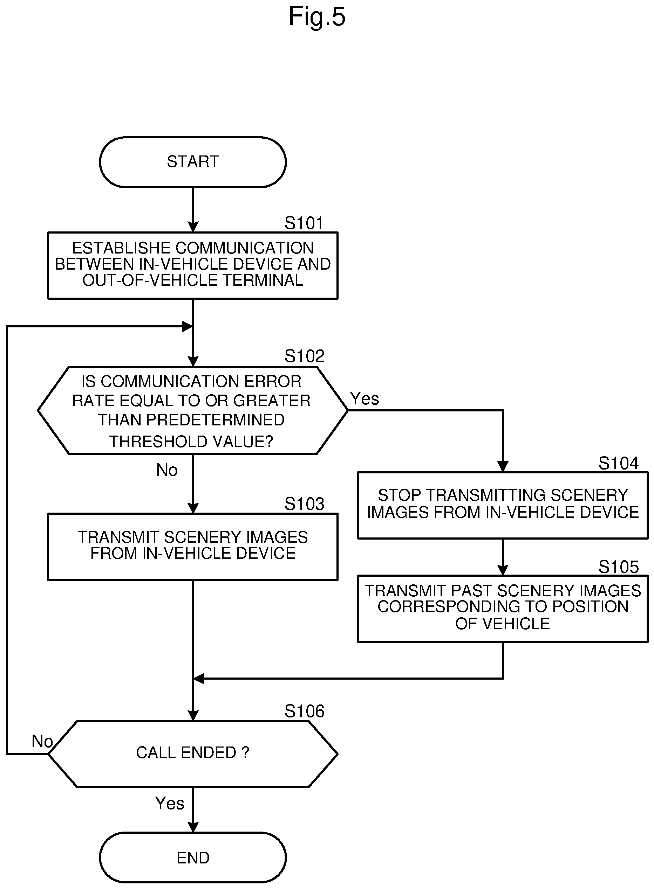

Fig. 5 is a flowchart of processing by the first example. First, the server device 3 establishes communication between the in-vehicle device 1 and the out-of-vehicle terminal 2 (step S101). The server device 3 transmits and receives information necessary to establish the communication between the in-vehicle device 1 and the out-of-vehicle terminal 2 (for example, communication address information or the like). Further, the server device 3 performs processing necessary for data communication between the in-vehicle device 1 and the out-of-vehicle terminal 2 (including authentication processing of the in-vehicle device 1 and the out-of-vehicle terminal 2). In a case where the communication between the in-vehicle device 1 and the out-of-vehicle terminal 2 is established, the driver can start a call with the user of the out-of-vehicle terminal 2. In addition, the in-vehicle device 1 transmits scenery images to the out-of-vehicle terminal 2 via the server device 3.

Next, the server device 3 calculates the communication error rate between the in-vehicle device 1 and the server device 3, and determines whether or not the communication error rate is equal to or greater than a predetermined threshold value (Step S102). In a case where the communication error rate is equal to or greater than the predetermined threshold TH1 (step S102: Yes), the server device 3 determines that the communication quality is unstable, and stops transmitting the scenery images received from the in-vehicle device 1 (step S104). Then, the server device 3 extracts the past scenery images based on the mobile object information received from the in-vehicle device 1, and transmits the extracted past scenery images to the out-of-vehicle terminal 2 (step S105). Further, in a case where the communication error rate is less than the predetermined threshold TH1 (step S102: No), the server device 3 determines that the communication quality is stable, and transmits the scenery images received from the in-vehicle device 1 to the out-of-vehicle terminal 2 (step S103).

Next, the server device 3 determines whether or not the call between the driver and the user of the out-of-vehicle terminal 2 has ended (step S106). In a case where the server device 3 determines that the call has ended (step S106: Yes), the flowchart processing is terminated. On the other hand, in a case where the server device 3 determines that the call has not ended (step S106: No), the processing returns to step S101.

In the first example, in a case where the communication quality of the in-vehicle device 1 is unstable, the server device 3 can display the past scenery image corresponding to the scenery image on the out-of-vehicle terminal 2. As a result, even when the communication quality of the in-vehicle device 1 is unstable, the user of the out-of-vehicle terminal 2 can grasp the shape of the road on which the subject vehicle is traveling, making it possible to provide route guidance to the driver.

### (Second example)

In the second example, a user's selection instruction is used as the predetermined condition. For example, the user of the out-of-vehicle terminal 2 can operate a selection button displayed on the out-of-vehicle terminal 2 to choose whether to display the scenery image or the past scenery image, and sends an instruction to the server device 3. In a case where the scenery image is selected, the server device 3 transmits the scenery image received from the in-vehicle device 1 to the out-of-vehicle terminal 2. On the other hand, in a case where the past scenery image is selected, the server device 3 transmits the past scenery image to the out-of-vehicle terminal 2. Further, the user of the out-of-vehicle terminal 2 may specify conditions such as the date and time (season or time of day) when the past scenery image was captured, and the weather at the time of capture. At this time, the server device 3 extracts past scenery images based on the mobile object information and the specified conditions, and transmits them to the out-of-vehicle terminal 2.

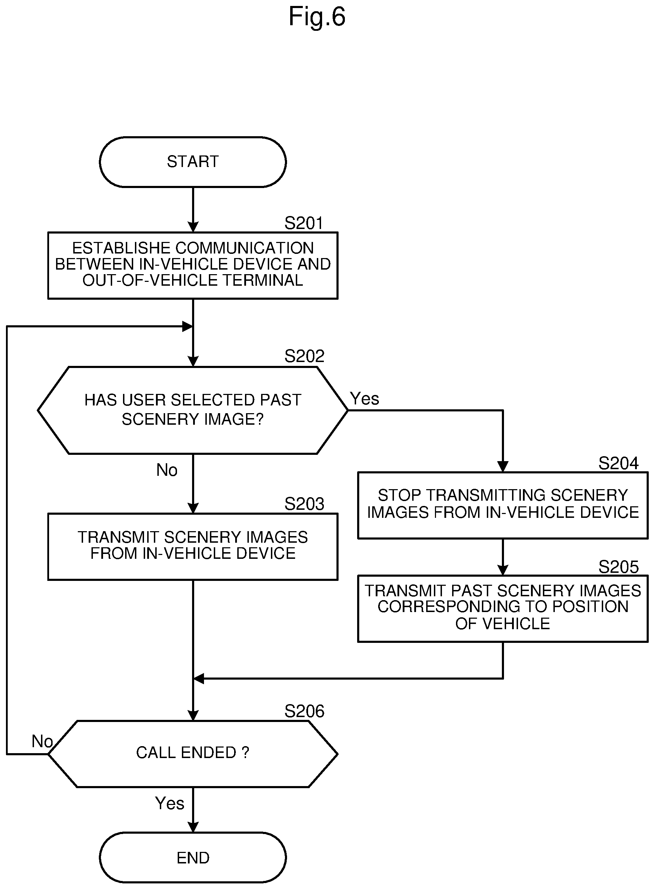

Fig. 6 is a flowchart of processing by the second example. Since the processes of step S201 and steps S203 to S206 are the same as those of step S101 and steps S103 to S106 in the first example shown in Fig. 5, a detailed description thereof is omitted.

The server device 3 determines whether or not the user of the out-of-vehicle terminal 2 has selected the past scenery image (step S202). In a case where the user has selected the past scenery image (step S202: Yes), the server device 3 proceeds to step S204. On the other hand, in a case where the user has not selected the past scenery image but has selected the scenery image (step S202: No), the server device 3 proceeds to step S203.

In the above example, the user of the out-of-vehicle terminal 2 performs the selection operation; however, instead, the driver may operate the in-vehicle device 1 to send the selection instruction for the image to be displayed on the out-of-vehicle terminal 2 to the server device 3.

In the second example, it is possible to switch the display between the scenery image and the past scenery image at a desired timing of the user. As a result, when the user feels that the visibility of the scenery image is poor due to fog or the like, by switching the display from the scenery image to the past scenery image, it becomes possible to provide route guidance to the driver. Further, when the user wishes to view a vehicle window scenery at a season or time different from the current one, it becomes possible to view the past scenery image captured at the specified season or time.

### (Third example)

In the third example, visibility of forward scenery is used as the predetermined condition. In a case where the server device 3 determines that the visibility of the forward scenery is good, it transmits the scenery image from the in-vehicle device 1 to the out-of-vehicle terminal 2. On the other hand, in a case where the server device 3 determines that the visibility of the forward scenery is poor, it transmits the past scenery image to the out-of-vehicle terminal 2.

The server device 3 may use, for example, a visibility distance (hereinafter also referred to as "visibility") as an indicator of the visibility of the forward scenery. For example, the server device 3 estimates the visibility from the scenery image received from the in-vehicle device 1 by using a pre-prepared image recognition model or the like, and determines whether or not the visibility of the forward scenery is good. Note that the visibility may be expressed as a distance (km) or may be expressed as a visibility class. This image recognition model may be a model that is trained in advance using training data in which visibility is labeled on a large number of scenery images.

Further, the server device 3 may use weather, a time of day, or a combination thereof as the indicator of the visibility. For example, the server device 3 acquires meteorological information including weather from a meteorological system or the like that provides meteorological information. Then, the server device 3 determines the visibility of the forward scenery based on the current position of the subject vehicle acquired from the in-vehicle device 1 and the meteorological information. In a case where the weather in an area in which the subject vehicle is traveling is not inclement weather, the server device 3 determines that the visibility of the forward scenery is good. On the other hand, in a case where the weather in the area in which the subject vehicle is traveling is inclement weather, the server device 3 determines that the visibility of the forward scenery is poor. Further, the server device 3 determines the visibility of the forward scenery based on the time of day during which the subject vehicle is traveling. When the time of day is daytime, the server device 3 determines that the visibility of the forward scenery is good. On the other hand, when the time of day is nighttime, the server device 3 determines that the visibility of the forward scenery is poor.

Note that the indicators of visibility of forward scenery described above are merely examples, and are not limited thereto.

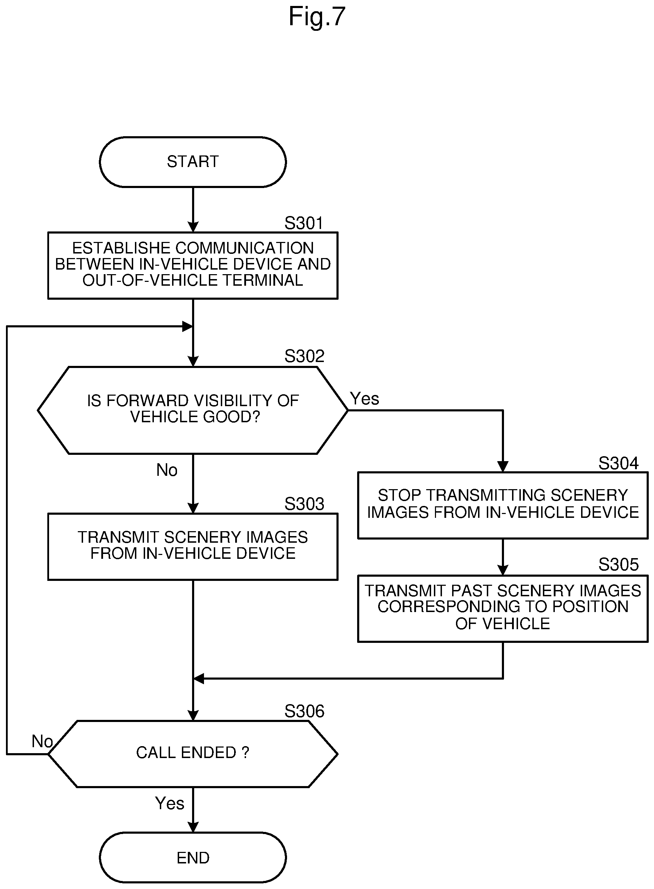

Fig. 7 is a flowchart of processing by the third example. Since the processes of step S301 and steps S303 to S306 are the same as those of step S101 and steps S103 to step S106 in the first example shown in Fig. 5, a detailed description thereof is omitted.

The server device 3 determines whether or not the visibility of the forward scenery of the subject vehicle is good (step S302). If the server device 3 determines that the visibility of the forward scenery is good (step S302: Yes), the server device 3 advances the processing to step S303. On the other hand, if the server device 3 determines that the visibility of the forward scenery is poor (step S302: No), the server device 3 advances the processing to step S304.

In the third example, the server device 3 determines the visibility of the forward scenery, and switches the display of the out-of-vehicle terminal 2 in accordance with the determination result, thereby making it possible to save the user from the trouble of a switching operation.

### (Fourth example)

In the fourth example, a communication data amount of the in-vehicle device 1 is used as the predetermined condition. In the fourth example, the in-vehicle device 1 is assumed to have a contract with a service provider that provides a communication service and to be subscribed to a communication plan. The communication plan is assumed to define a limit value of a communication data amount in a predetermined period and a communication fee.

For example, the in-vehicle device 1 calculates an available communication data amount based on a current communication data consumption amount and the limit value of the communication data amount. In a case where the available communication data amount becomes less than a predetermined threshold TH2, the in-vehicle device 1 notifies the server device 3 and stops transmission of scenery images. In a case where the server device 3 receives the notification from the in-vehicle device 1, the server device 3 starts transmission of past scenery images to the out-of-vehicle terminal 2.

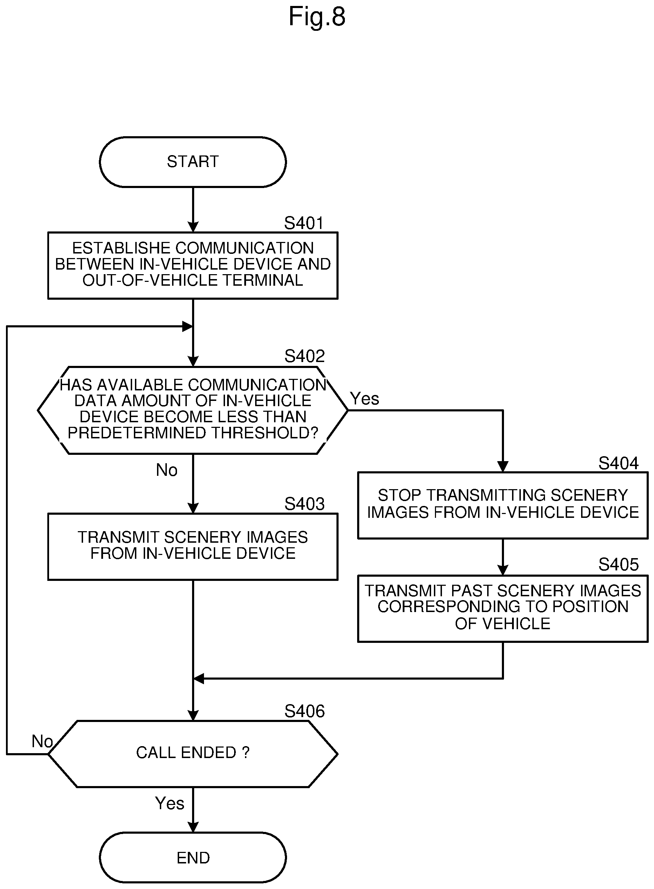

Fig. 8 is a flowchart of processing by the fourth example. Since the processes of step S401 and steps S403 to S406 are the same as those of step S101 and steps S103 to S106 in the first example shown in Fig. 5, a detailed description thereof is omitted.

The server device 3 determines, based on a notification from the in-vehicle device 1, whether or not an available communication data amount has become less than the predetermined threshold TH2 (step S402). In a case where there is a notification from the in-vehicle device 1, that is, in a case where the available communication data amount has become less than the predetermined threshold TH2 (step S402: Yes), the server device 3 advances the processing to step S404. On the other hand, in a case where there is no notification from the in-vehicle device 1, that is, in a case where the available communication data amount is not less than the predetermined threshold TH2 (step S402: No), the server device 3 advances the processing to step S403.

In the fourth example, the server device 3 makes it possible for the user of the out-of-vehicle terminal 2 to grasp the shape of the road on which the subject vehicle is traveling, while saving the communication data amount of the in-vehicle device 1.

### [Display example]

Next, display examples of the out-of-vehicle terminal 2 will be described.

### (Scenery image display mode)

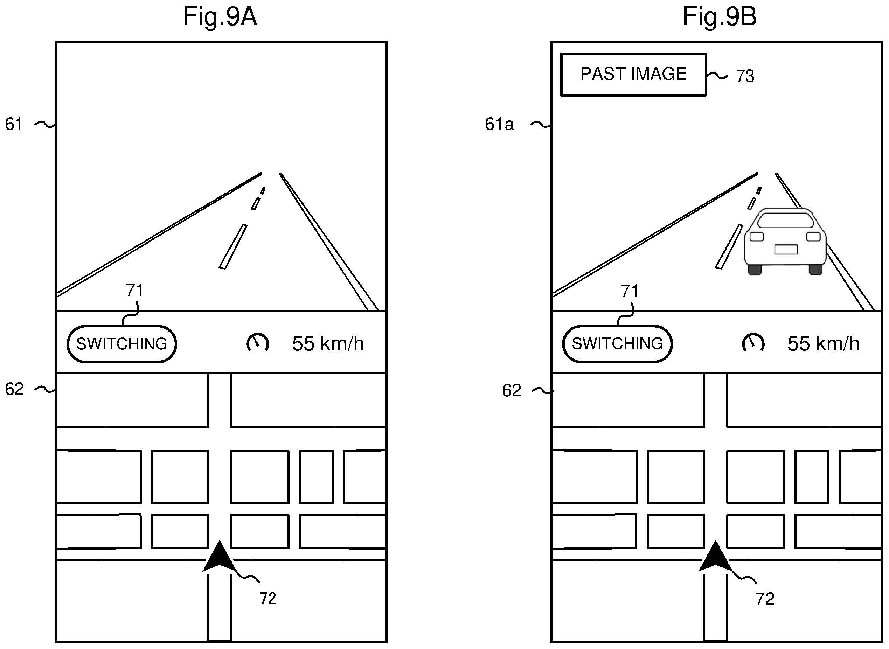

Fig. 9A is a display example of the scenery image. In Fig. 9A, an image display area 61, a map display area 62, a switching button 71, and a position mark 72 are displayed on the display screen of the out-of-vehicle terminal 2.

In the image display area 61, the latest scenery image (moving image) captured by the exterior imaging camera 51 of the subject vehicle is displayed. In the map display area 62, map information around the current position of the subject vehicle is displayed. The map display area 62 includes the position mark 72 indicating the current position of the subject vehicle. The switching button 71 is a button for selecting whether to display the scenery image or a past scenery image. The user of the out-of-vehicle terminal 2 can switch between displaying the scenery image and the past scenery image by pressing the switching button 71.

### (Past scenery image display mode)

Fig. 9B is a display example of the past scenery image. In Fig. 9B, an image display area 61a, the map display area 62, the switching button 71, the position mark 72, and a past mark 73 are displayed on the display screen of the out-of-vehicle terminal 2. In the image display area 61a, the past scenery image corresponding to the scenery image of the subject vehicle is displayed. In addition, the image display area 61a includes the past mark 73 indicating that the past scenery image is being displayed.

Thus, in the display example of the out-of-vehicle terminal 2, the server device 3 can cause the scenery image or the past scenery image to be displayed on the out-of-vehicle terminal 2, thereby enabling the user of the out-of-vehicle terminal 2 to grasp the shape of the road on which the subject vehicle is traveling. As a result, for example, the user of the out-of-vehicle terminal 2 can provide guidance to the driver.

### [Modification]

Next, a preferable modification of the above-described embodiment will be described. The following modifications may be applied to the above-described embodiment in combination.

### (Modification 1)

The in-vehicle device 1 and the out-of-vehicle terminal 2 may perform transmission and reception of the voice data and the scenery images without using the server device 3 when transmitting the scenery image to the out-of-vehicle terminal 2, and may use the server device 3 only when transmitting the past scenery image to the out-of-vehicle terminal 2.

As an example, in the display control processing of the server device 3, in a case where communication quality is used as the predetermined condition, the out-of-vehicle terminal 2 calculates a communication error rate between the in-vehicle device 1 and the out-of-vehicle terminal 2 and transmits it to the server device 3. Then, the server device 3 determines whether or not the communication quality is stable based on the communication error rate received from the out-of-vehicle terminal 2. In a case where the server device 3 determines that the communication quality is unstable, it notifies the in-vehicle device 1 and starts transmission of the past scenery images to the out-of-vehicle terminal 2. In a case where the in-vehicle device 1 receives the notification from the server device 3, it stops transmission of the scenery images. Alternatively, instead of this, the out-of-vehicle terminal 2 may calculate the communication error rate between the in-vehicle device 1 and the out-of-vehicle terminal 2 and determine whether or not the communication quality is stable. In this mode, when the out-of-vehicle terminal 2 determines that the communication quality is unstable, it notifies the in-vehicle device 1 and the server device 3. Then, in a case where the server device 3 receives the notification from the out-of-vehicle terminal 2, it starts transmission of the past scenery images, and in a case where the in-vehicle device 1 receives the notification from the out-of-vehicle terminal 2, it stops transmission of the scenery images.

As another example, in the display control processing of the server device 3, in a case where the predetermined condition is that a switching operation from the in-vehicle device 1 or the out-of-vehicle terminal 2 is accepted, the in-vehicle device 1 or the out-of-vehicle terminal 2 that has accepted the switching operation from the scenery image to the past scenery image transmits a switching request to the server device 3. Then, the server device 3 starts transmission of the past scenery images to the out-of-vehicle terminal 2 and requests the in-vehicle device 1 to stop transmission of the scenery images. Alternatively, instead of this, a mode may be adopted in which the in-vehicle device 1 that has accepted the switching operation from the scenery image to the past scenery image transmits the switching request to the out-of-vehicle terminal 2, and the out-of-vehicle terminal 2 transmits the past scenery image transmission request to the server device 3. In this mode, in a case where the in-vehicle device 1 accepts the switching operation, the server device 3 receives the past scenery image transmission request from the out-of-vehicle terminal 2, starts transmission of the past scenery images to the out-of-vehicle terminal 2, and requests the in-vehicle device 1 to stop transmission of the scenery images. On the other hand, in a case where the out-of-vehicle terminal 2 accepts the switching operation, the out-of-vehicle terminal 2 transmits the past scenery image transmission request to the server device 3, receives the past scenery images from the server device 3, and requests the in-vehicle device 1 to stop transmission of the scenery images.

As another example, in the display control processing of the server device 3, in a case where the predetermined condition is the visibility of the forward scenery, the in-vehicle device 1 or the out-of-vehicle terminal 2 determines the visibility of the forward scenery, and in a case where the visibility of the forward scenery is determined to be not good, transmits a determination result to the server device 3. Then, the server device 3 notifies the in-vehicle device 1 based on the determination result and starts transmission of the past scenery images to the out-of-vehicle terminal 2. When the in-vehicle device 1 receives the notification from the server device 3, it stops transmission of the scenery images. Alternatively, instead of this, a mode may be adopted in which the in-vehicle device 1 transmits the determination result to the out-of-vehicle terminal 2 in a case where the in-vehicle device 1 determines that the visibility of the forward scenery is not good. In this mode, in a case where the out-of-vehicle terminal 2 receives, from the in-vehicle device 1, the determination result that the visibility of the forward scenery is not good, the out-of-vehicle terminal 2 transmits the past scenery image transmission request to the server device 3, receives the past scenery images from the server device 3, and requests the in-vehicle device 1 to stop transmission of the scenery images.

As another example, in the display control processing of the server device 3, in a case where the predetermined condition is the available communication data amount of the in-vehicle device 1, the in-vehicle device 1 determines whether or not the available communication data amount is less than the predetermined threshold TH2, and in a case where the available communication data amount is determined to be less than the predetermined threshold TH2, the in-vehicle device 1 transmits a determination result to the server device 3 and stops transmission of the scenery images. Then, the server device 3 starts transmission of the past scenery images to the out-of-vehicle terminal 2. Alternatively, instead of this, a mode may be adopted in which, in a case where the in-vehicle device 1 determines that the available communication data amount is less than the predetermined threshold TH2, the in-vehicle device 1 transmits a determination result to the out-of-vehicle terminal 2. In this mode, in a case where the out-of-vehicle terminal 2 receives, from the in-vehicle device 1, the determination result that the available communication data amount is less than the predetermined threshold TH2, the out-of-vehicle terminal 2 transmits the past scenery image transmission request to the server device 3, receives the past scenery images from the server device 3, and requests the in-vehicle device 1 to stop transmission of the scenery images.

### (Modification 2)

In the above-described embodiment, the server device 3 transmits either the scenery image or the past scenery image to the out-of-vehicle terminal 2. However, the server device 3 may display the scenery image and the past scenery image side by side based on a user's selection.

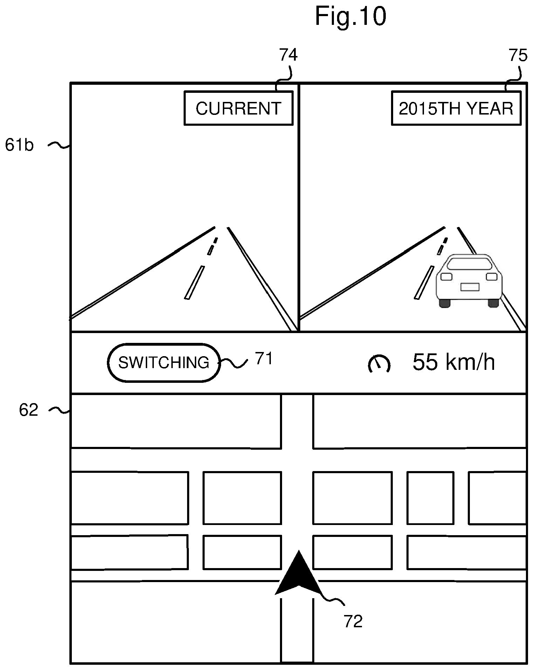

Fig. 10 shows a display example of the out-of-vehicle terminal 2 according to the modification 2. In Fig. 10, an image display area 61b, the map display area 62, the switching button 71, the position mark 72, a current mark 74 and a past mark 75 are displayed on the display screen of the out-of-vehicle terminal 2. In the image display area 61b, the scenery image and the past scenery image are displayed side by side. The image display area 61b includes the current mark 74 indicating that the image is the scenery image, and the past mark 75 indicating that the image is the past scenery image. The past mark 75 only needs to indicate that the displayed image is the past scenery image. In Fig. 10, as the past mark 75, a year in which the past scenery image was captured is displayed. With the display as shown in Fig. 10, the user of the out-of-vehicle terminal 2 can enjoy comparing the present scenery with the past scenery.

### (Modification 3)

The server device 3 may extract, from the past image library 6, one or more interpolated images to be inserted between the past scenery image corresponding to currently received mobile object information and the past scenery image corresponding to mobile object information to be received next, and may cause the out-of-vehicle terminal 2 to display the interpolated images.

Specifically, the server device 3 estimates an interpolated position between the current position of the subject vehicle and the next position of the subject vehicle at predetermined time intervals T2 (hereinafter referred to as the "interpolated position"). Then, the server device 3 extracts the past scenery image corresponding to the interpolated position from the past image library 6. The server device 3 causes the extracted past scenery image to be displayed on the out-of-vehicle terminal 2 as the interpolated image. Here, the predetermined time interval T2 is a previously defined numerical value. The predetermined time interval T2 is set to a value greater than zero and smaller than the update interval of the mobile object information (predetermined time interval T1). In addition, the next position of the subject vehicle is the positioning location of the mobile object information to be received next. Furthermore, the interpolated position is an example of a "corrected position."

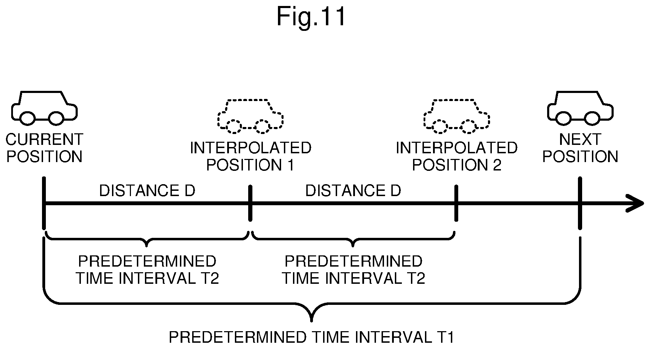

Fig. 11 is a diagram for explaining a method of estimating interpolated positions. The server device 3 calculates a distance D based on the predetermined time interval T2 and the current moving speed of the subject vehicle. Then, the server device 3 estimates a position reached by the subject vehicle after traveling the distance D in its current moving direction from the current position as interpolated position 1. The server device 3 extracts the past scenery image corresponding to the interpolated position 1 from the past image library 6 and causes it to be displayed on the out-of-vehicle terminal 2. Next, the server device 3 estimates a position reached by the subject vehicle after traveling the distance D in the current moving direction from the interpolated position 1 as interpolated position 2. The server device 3 extracts the past scenery image corresponding to the interpolated position 2 from the past image library 6 and causes it to be displayed on the out-of-vehicle terminal 2. In this manner, until the next reception of the mobile object information, the server device 3 extracts the interpolated images at the predetermined time intervals T2 and causes them to be displayed on the out-of-vehicle terminal 2.

As a result, the server device 3 can cause the past scenery images to be displayed on the out-of-vehicle terminal 2 as a smooth moving image.

### (Modification 4)

The server device 3 may extract the past scenery images while taking into account processing delays and communication delays.

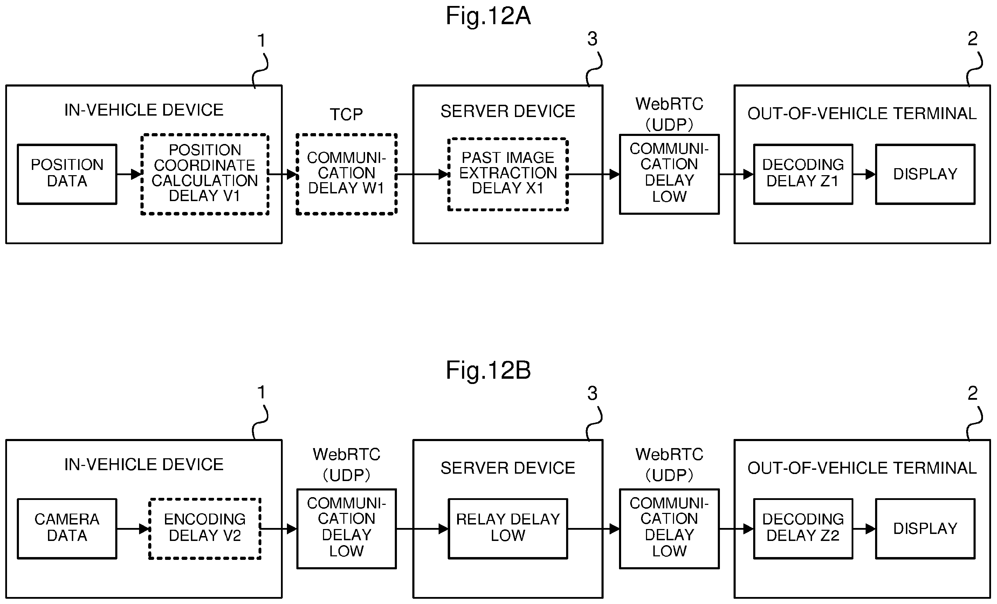

Figs. 12A and 12B are diagrams for explaining a flow until each image is displayed and points at which delays occur. Fig. 12A shows the flow until the past scenery image is displayed. In Fig. 12A, sections that require time (hereinafter also referred to as "delays") are indicated by dashed rectangles, while sections that do not require significant time (i.e., sections that have little impact on the overall processing time) are indicated by solid rectangles. As shown in FIG. 12A, among a plurality of processes performed before the past scenery image is displayed on the out-of-vehicle terminal 2, delays occur in calculation of the position by the in-vehicle device 1, the transmission of the mobile object information from the in-vehicle device 1 to the server device 3, and the extraction of the past scenery image by the server device 3.

Fig. 12B shows the flow until the scenery image is displayed. In Fig. 12B, as in Fig. 12A, sections corresponding to delays are indicated by dashed rectangles, while sections that do not require significant time are indicated by solid rectangles. As shown in Fig. 12B, among a plurality of processes performed before the scenery image is displayed on the out-of-vehicle terminal 2, a delay occurs in the encoding of the scenery image (moving image) performed by the in-vehicle device 1.

As shown in Figs. 12A and 12B, compared with the scenery image, the past scenery image has a larger number of points at which delays occur before being displayed on the out-of-vehicle terminal 2. Therefore, a display timing of the past scenery image on the out-of-vehicle terminal 2 becomes later than a display timing of the scenery image. Accordingly, in order to match the display timing of the past scenery image with the display timing of the scenery image, the server device 3 corrects the delays described above.

Specifically, first, the server device 3 calculates a difference between a display delay time of the past scenery image and a display delay time of the scenery image. The display delay time of the past scenery image includes, as shown in Fig. 12A, a position coordinate calculation processing delay V1, a communication delay W1, and a past scenery image extraction processing delay X1. The display delay time of the scenery image includes, as shown in Fig. 12B, an encoding processing delay V2. Then, the server device 3 calculates the difference in the display delay time based on the following equation. $Difference in display delay time = \left(V1-V2\right) + W 1 + X 1$

Here, the server device 3 applies, as the position coordinate calculation processing delay V1, a design theoretical value of a position coordinate calculation process, and applies, as the encoding processing delay V2, a design theoretical value of an encoding process. In addition, the server device 3 applies, as the communication delay W1, a difference time between a timestamp added by the in-vehicle device 1 at a time of transmission of the mobile object information and a time at which the server device 3 receives the mobile object information. Further, the server device 3 applies, as the past scenery image extraction processing delay X1, a design theoretical value of a longest time of a past scenery image extraction process.

Next, in the past scenery image extraction process, the server device 3 treats a position obtained by advancing from the current position in the moving direction by a distance of "moving speed × difference in display delay time" as the current position, and extracts the past scenery image corresponding to that position from the past image library 6. When a route has been preset, the server device 3 treats a position obtained by advancing along the route from the current position by a distance of "moving speed × difference in display delay time" as the current position. Then, the server device 3 causes the extracted past scenery image to be displayed on the out-of-vehicle terminal 2.

Thus, according to this modification, since the display timing of the past scenery image on the out-of-vehicle terminal 2 can be matched with the display timing of the scenery image, it is possible, for example, to reduce a positional shift of the scenery when the display is switched between the past scenery image and the scenery image.

Note that the server device 3 may use, instead of the difference in the display delay time, a difference between a time required from when a vehicle equipped with the in-vehicle device 1 reaches a first position until the past scenery image corresponding to the first position is displayed on the out-of-vehicle terminal 2, and a time required from when the vehicle equipped with the in-vehicle device 1 reaches the first position until the scenery image captured by the in-vehicle device 1 at the first position is displayed on the out-of-vehicle terminal 2 (hereinafter also referred to as the "difference in display times"). In this case, the server device 3 treats a position obtained by advancing from the current position in the moving direction by a distance of "moving speed × difference in display times" as the current position, and extracts the past scenery image corresponding to that position.

In addition, the server device 3 may correct the delay using only the display delay time of the past scenery image instead of the difference in the display delay time. In this case, the server device 3 treats a position obtained by advancing from the current position in the moving direction by a distance of "moving speed × display delay time of the past scenery image" as the current position, and extracts a past scenery image corresponding to that position. The display delay time of the past scenery image is an example of "a time required for a process of extracting the past scenery image". Thus, the server device 3 can display, on the out-of-vehicle terminal 2, the past scenery image corresponding to the scenery that the driver of the subject vehicle is currently viewing.

It should be noted that the above-described method for correcting the delay is only an example and is not limited thereto.

As described above, the server device 3 functions as an information processing device and includes an acquisition means, an image extraction means, and a display control means. The acquisition means acquires mobile object information including a current position, a moving direction, and a moving speed of a mobile object. The image extraction means extracts a past scenery image corresponding to a surrounding scenery at the current position of the mobile object, based on the current position, the moving direction, and the moving speed, from among past images captured in the past. The display control means causes the past scenery image to be displayed on a terminal device existing outside the mobile object. Thus, the user of the out-of-vehicle terminal 2 can grasp what kind of location the mobile object is traveling through.

In the above-described embodiments, the program may be stored using various types of non-transitory computer-readable medium and can be supplied to a control unit or the like that is a computer. The non-transitory computer-readable medium includes a storage medium (tangible storage medium) of various types of entities. Examples of the non-transitory computer-readable medium include a magnetic storage medium (e.g., a flexible disk, a magnetic tape, a hard disk drive), a magnetooptical storage medium (e.g., a magnetooptical disk), a CD-ROM (Read Only Memory), a CD-R, a CD-R/W, a semiconductor memory (e.g., a mask ROM, a PROM (Programmable ROM), an EPROM (an Erasable PROM, a flash ROM, a RAM (Random Access Memory)).

While the present invention has been described with reference to the embodiments, the present invention is not limited to the above embodiments. Various changes that can be understood by those skilled in the art within the scope of the present invention can be made in the configuration and details of the present invention. In other words, it is needless to say that the present invention includes various modifications and modifications that could be made by a person skilled in the art according to the entire disclosure, including the scope of the claims, and the technical philosophy. In addition, each disclosure of the above-mentioned patent documents, etc. cited shall be incorporated with reference to this document.

### BRIEF DESCRIPTION OF REFERENCE NUMBERS

- 1: in-vehicle device
- 2: out-of-vehicle terminal
- 3: server device
- 4: communication network
- 5: map DB
- 11,21,31: communication unit
- 12,22,32: storage unit
- 13: input unit
- 14,24,33: control unit
- 15,25: sensor group
- 16,26: display unit
- 17,27: voice output unit

## Claims

1. An information processing device comprising:
an acquisition means configured to acquire mobile object information including a current position, a moving direction, and a moving speed of a mobile object;
an image extraction means configured to extract a past scenery image corresponding to a surrounding scenery at the current position of the mobile object, based on the current position, the moving direction, and the moving speed, from among past images captured in the past; and
a display control means configured to cause the past scenery image to be displayed on a terminal device existing outside the mobile object.

2. The information processing device according to claim 1, wherein the image extraction means identifies a corrected position advanced from the current position in the moving direction based on the moving speed, and extracts, as the past scenery image, the past image associated with the corrected position.

3. The information processing device according to claim 2, wherein the image extraction means identifies, as the corrected position, a position advanced from the current position in the moving direction by a distance traveled during a predetermined time at the moving speed.

4. The information processing device according to claim 3, wherein the predetermined time is set based on an update interval of the mobile object information.

5. The information processing device according to claim 4, wherein the predetermined time is set based on a time required for the image extraction means to perform a process of extracting the past scenery image.

6. The information processing device according to claim 3,
wherein the acquisition means acquires a current scenery image obtained by capturing an external scenery from the mobile object at the current position,
the information processing device further comprising display image determination means configured to determine an image to be displayed on the terminal device from among the current scenery image and the past scenery image, and
the display control means causes the image determined by the display image determination means to be displayed on the terminal device.

7. The information processing device according to claim 6,
wherein the predetermined time is set based on a difference time between a past image display time required from when the current position of the mobile object reaches a first position until the past scenery image corresponding to the first position is displayed on the terminal device, and
a current image display time required from when the current position of the mobile object reaches the first position until the current scenery image captured from the mobile object at the first position is displayed on the terminal device.

8. The information processing device according to any one of claims 1 to 7, which is used in a system that mediates communication between an occupant of the mobile object and a user who uses the terminal device outside the mobile object.

9. A control method executed by a computer, comprising:
acquiring mobile object information including a current position, a moving direction, and a moving speed of a mobile object;
extracting a past scenery image corresponding to a surrounding scenery at the current position of the mobile object, based on the current position, the moving direction, and the moving speed, from among past images captured in the past; and
causing the past scenery image to be displayed on a terminal device existing outside the mobile object.

10. A program causing a computer to execute processing of:
acquiring mobile object information including a current position, a moving direction, and a moving speed of a mobile object;
extracting a past scenery image corresponding to a surrounding scenery at the current position of the mobile object, based on the current position, the moving direction, and the moving speed, from among past images captured in the past; and
causing the past scenery image to be displayed on a terminal device existing outside the mobile object.

11. A storage medium storing the program according to claim 10.
